# EUROPEAN PATENT APPLICATION

(11) **EP 4 318 700 A1**
(43) Date of publication of application: **07.02.2024**
(21) Application number: 23788492.9
(22) Date of filing: 24.03.2023
(51) Int. Cl.: H01M 10/04

(54) **ELECTRODE ASSEMBLY AND BATTERY CELL INCLUDING SAME**

(30) Priority: 15.04.2022 KR 20220046806
(71) Applicant: LG ENERGY SOLUTION, LTD., Seoul 07335 (KR)
(72) Inventor: LEE, Byeong Kyu, Daejeon 34122 (KR); JUNG, Su Taek, Daejeon 34122 (KR); CHUNG, Joo Young, Daejeon 34122 (KR); KIM, Jin Gon, Daejeon 34122 (KR); JUNG, Woo Jung, Daejeon 34122 (KR); KIM, Seung Il, Daejeon 34122 (KR)
(74) Representative: Goddar, Heinz J.
(86) International application number: PCT/KR2023/003981
(87) International publication number: WO 2023/200140

(57) **Abstract**

An electrode assembly according to one embodiment of the present disclosure is an electrode assembly in which electrodes and separator sheets are alternately stacked, wherein: the electrode includes a first electrode and a second electrode, the separator sheet has a zigzag shape formed by being folded at least twice, a length of the second electrode is shorter than a length of the first electrode, a side surface wrapped by the separator sheet among both side surfaces of the first electrode and a side surface wrapped by the separator sheet among both side surfaces of the second electrode are respectively spaced apart from the separator sheet, an opposite side surface of the side surface wrapped by the separator sheet among both side surfaces of the first electrode protrudes further than the separator sheet from the side surface wrapped by the separator sheet among both side surfaces of the second electrode, and a separation distance between the separator sheet and the side surface of the second electrode is equal to or shorter than a distance by which the first electrode protrudes further than the second electrode from the side surface wrapped by the separator sheet among both side surfaces of the second electrode.

## Description

### [TECHNICAL FIELD]

### Cross Citation with Related Application(s)

This application claims the benefit of Korean Patent Application No. 10-2022-0046806 filed on April 15, 2022 with the Korean Intellectual Property Office, the disclosure of which is hereby incorporated by reference in its entirety.

The present disclosure relates to an electrode assembly and a battery cell including the same, and more particularly, to an electrode assembly in which electrodes and separator sheets are alternately stacked in a Z-folding type, and a battery cell including the same, which are an electrode assembly that can prevent the occurrence of overhang in which a positive electrode deviates from a negative electrode to disturb alignment, and a battery cell including the same.

### [BACKGROUND]

In general, there are various kinds of secondary batteries, such as a nickel cadmium battery, a nickel hydride battery, a lithium ion battery, and a lithium ion polymer battery. Such secondary batteries have been used in large-sized products that require high output, such as an electric vehicle and a hybrid electric vehicle, a power storage device for storing surplus power or new and renewable energy, and a backup power storage device, as well as small-sized products, such as a digital camera, a P-DVD, an MP3P, a mobile phone, a PDA, a portable game device, a power tool, and an E-bike.

In order to manufacture such a secondary battery, first, an electrode active material slurry is applied to a positive electrode current collector and a negative electrode current collector to manufacture a positive electrode and a negative electrode, which are stacked on both sides of a separator, thereby forming an electrode assembly having a predetermined shape. Then, the battery assembly is housed in a battery case, and an electrolyte solution is injected to seal the battery case.

The electrode assemblies are classified into various types. There may be mentioned a simple stack type in which the positive electrodes, separators and negative electrodes are simply alternatively stacked without manufacturing a unit cell, a lamination & stack type (L&S) in which unit cells are first manufactured using positive electrodes, separators, and negative electrodes, and then these unit cells are stacked, a stack & folding type (S&F) in which a plurality of unit cells are spaced apart and attached to one surface of a separator sheet that is long on one side, and the separator sheet is repeatedly folded in the same direction from one end, a Z-folding type in which a plurality of electrodes or unit cells are alternately attached to one surface and the other surface of a separator sheet that is long on one side, and processes of folding the separator sheet from one end in a specific direction and then folding it in the opposite direction are alternately repeated, and the like. Among them, the Z-folding type has a high degree of alignment and a high degree of electrolyte impregnation, and thus, has been frequently used in recent years.

Conventionally, however, when electrodes and separator sheets are stacked in such a Z-folding type, the portion of the separator sheet that wraps the electrode greatly exceeds the negative electrode and positive electrode, and the positive electrode is designed to have a smaller area than the negative electrode, whereby there is a high possibility of occurrence of overhang in which the positive electrode deviates from the negative electrode to disturb alignment. At this time, when the overhang phenomenon occurs, not only the performance of the electrode assembly and the battery cell including the electrode assembly may be degraded, but also the possibility of defects such as short circuits may be greatly increased.

Therefore, there is a need to develop an electrode assembly having a structure that can prevent the occurrence of overhang in which the positive electrode deviates from the negative electrode to disturb alignment, and a battery cell including the same.

### [DETAILED DESCRIPTION OF THE INVENTION]

### [Technical Problem]

It is an object of the present disclosure to provide an electrode assembly in which electrodes and separator sheets are alternately stacked in a Z-folding type, and a battery cell including the same, which are an electrode assembly that can prevent the occurrence of overhang in which a positive electrode deviates from a negative electrode to disturb alignment, and a battery cell including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided an electrode assembly in which electrodes and separator sheets are alternately stacked, wherein: the electrode comprises a first electrode and a second electrode, the separator sheet has a zigzag shape formed by being folded at least twice, a length of the second electrode is shorter than a length of the first electrode, a side surface wrapped by the separator sheet among both side surfaces of the first electrode and a side surface wrapped by the separator sheet among both side surfaces of the second electrode are respectively spaced apart from the separator sheet, an opposite side surface of the side surface wrapped by the separator sheet among both side surfaces of the first electrode protrudes further than the separator sheet from the side surface wrapped by the separator sheet among both side surfaces of the second electrode, and a separation distance between the separator sheet and the side surface of the second electrode is equal to or shorter than a distance by which the first electrode protrudes further than the second electrode from the side surface wrapped by the separator sheet among both side surfaces of the second electrode.

The separation distance between the separator sheet and the side surface of the second electrode may be equal to or shorter than the distance by which the first electrode protrudes further than the second electrode from the side surface wrapped by the separator sheet among both side surfaces of the second electrode.

The separation distance between the separator sheet and the side surface of the first electrode may be equal to or shorter than the separation distance between the separator sheet and the side surface of the second electrode.

The side surface wrapped by the separator sheet among both side surfaces of the first electrode may protrude further than the second electrode from the opposite side surface of the side surface wrapped by the separator sheet among both side surfaces of the second electrode.

The opposite side surface of the side surface wrapped by the separator sheet among both side surfaces of the first electrode may be located on the same vertical line as the outer side surface of the electrode assembly.

The opposite side surface of the side surface wrapped by the separator sheet among both side surfaces of the first electrode and the side surface wrapped by the separator sheet among both side surfaces of the second electrode may be located so as to be adjacent to each other.

The separator sheet may be interposed between the upper surface of the first electrode and the lower surface of the second electrode and between the upper surface of the second electrode and the lower surface of the first electrode.

When the side surface wrapped by the separator sheet among both side surfaces of the second electrode makes contact with the separator sheet, the opposite side surface of the side surface wrapped by the separator sheet among both side surfaces of the first electrode may be maintained so as to protrude further than the second electrode from the side surface wrapped by the separator sheet among both side surfaces of the second electrode.

When the side surface wrapped by the separator sheet among both side surfaces of the first electrode makes contact with the separator sheet, the opposite side surface of the side surface wrapped by the separator sheet among both side surfaces of the first electrode may be maintained so as to protrude further than the second electrode from the side surface wrapped by the separator sheet among both side surfaces of the second electrode.

When the side surface wrapped by the separator sheet among both side surfaces of the first electrode makes contact with the separator sheet, the opposite side surface of the side surface wrapped by the separator sheet among both side surfaces of the first electrode may be located on the same vertical line as the second electrode with respect to the side surface wrapped by the separator sheet among both side surfaces of the second electrode.

One end of the separator sheet of the electrode assembly according to another embodiment of the present disclosure may be extended along an outer surface of the electrode assembly.

One end of the separator sheet may wrap an entire outer surface of the electrode assembly.

According to yet another embodiment of the present disclosure, there is provided a battery cell comprising the above-mentioned electrode assembly.

### [Advantageous Effects]

According to embodiments, the present disclosure is configured such that electrodes and separator sheets are alternately stacked in a Z-folding type, and a separation distance between the separator sheet and the side surface of the positive electrode is equal to or shorter than a distance by which the negative electrode protrudes further than the positive electrode from the side surface of the positive electrode wrapped by the separator sheet, thereby capable of preventing the occurrence of overhang in which a positive electrode deviates from a negative electrode to disturb alignment.

Also, the present disclosure is configured such that electrodes and separator sheets are alternately stacked in a Z-folding type, and a separation distance between the separator sheet and the side surface of the negative electrode is equal to or shorter than a distance by which the negative electrode protrudes further than the positive electrode from the side surface of the positive electrode wrapped by the separator sheet, thereby capable of preventing the occurrence of overhang in which a positive electrode deviates from a negative electrode to disturb alignment.

The effects of the present disclosure are not limited to the effects mentioned above and additional other effects not mentioned above will be clearly understood from the detailed description and the accompanying drawings by those skilled in the art.

### [BRIEF DESCRIPTION OF THE DRAWINGS]

FIG. 1 is a diagram showing a final electrode assembly according to an embodiment of the present disclosure;
FIG. 2 is a cross-sectional view of the electrode assembly taken along the A-A' axis of FIG. 1;
FIGS. 3 and 4 are diagrams showing a part of the cross section of the electrode assembly of FIG. 2;
FIG. 5 is a diagram showing a slip of the second electrode of FIG. 4;
FIG. 6 is an enlarged view of section A of FIG. 5;
FIG. 7 is a diagram showing a part of a cross section of the electrode assembly of FIG. 2;
FIG. 8 is a diagram showing a slip of the first electrode of FIG. 7;
FIG. 9 is an enlarged view of section B of FIG. 8;
FIG. 10 is a cross-sectional view of an electrode assembly according to another embodiment of the present disclosure; and
FIG. 11 is a view showing a part of a cross section of an electrode assembly according to a comparative example.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described. However, a partial cross section of the electrode assembly is mainly described, but is not necessarily limited thereto, and other cross sections can also be described in the same or similar manner.

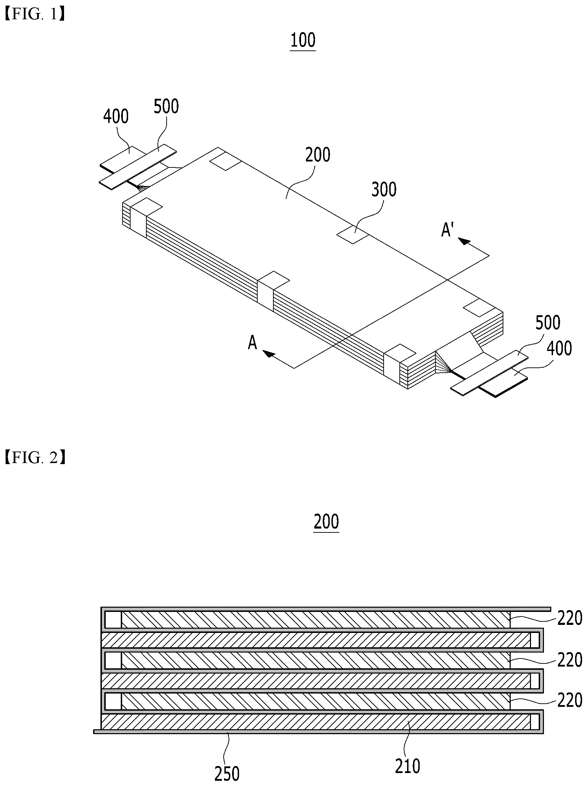

FIG. 1 is a diagram showing a final electrode assembly according to an embodiment of the present disclosure. FIG. 2 is a cross-sectional view of the electrode assembly taken along the A-A' axis of FIG. 1.

Referring to FIGS. 1 and 2, a final electrode assembly 100 according to the present disclosure may mean a structure in which a fixing tape 300 is attached to an outer surface of an electrode assembly 200. Thereby, the final electrode assembly 100 can maintain a stacked alignment state between a first electrode 210, a second electrode 220, and a separator sheet 250 included in the electrode assembly 200. In particular, as will be described later, the fixing tape 300 can maintain a stacked alignment state between the electrodes 210 and 220 and the separator sheet 250, so that the opposite side surface of the side surface wrapped by the separator sheet 250 among both side surfaces of the first electrode 210 is located on the same vertical line as the outer side surface of the electrode assembly 200. However, the present disclosure is not limited thereto, and the fixing tape 300 is omitted from the final electrode assembly 100, or is replaced with another member, thereby capable of maintaining the stacked alignment state between the first electrode 210, the second electrode 220 and the separator sheet 250.

Further, the final electrode assembly 100 may include an electrode lead 400 to which electrode tabs extending from a plurality of first electrodes 210 and a plurality of second electrodes 220 included in the electrode assembly 200 are joined. As an example, as shown in FIG. 1, the electrode leads 400 may extend to both ends of the electrode assembly 200, respectively, and the electrode lead 400 may be divided into a positive electrode lead or a negative electrode lead depending on polarities of the first electrode 210 and the second electrode 220. However, the position of the electrode lead 400 is not limited thereto, and unlike those shown FIG. 1, it may be extended together to one end of the electrode assembly 200.

Further, the final electrode assembly 100 may include a lead film 500 located in upper and lower parts of the electrode lead 400. Here, as the final electrode assembly 100 is mounted to a battery case (not shown), the lead film 500 can be sealed by a sealing part (not shown) along with outer peripheral sides of the battery case (not shown).

Referring to Figs. 1 and 2, the electrode assembly 200 according to one embodiment of the present disclosure may be an electrode assembly in which electrodes 210 and 220 and separator sheets 250 are alternately stacked.

The electrodes 210 and 220 may include a first electrode 210 and a second electrode 220. Here, the first electrode 210 and the second electrode 220 may include electrode active materials having different polarities from each other. That is, the first electrode 210 and the second electrode 220 may be electrodes having different polarities from each other. As an example, if the first electrode 210 is a negative electrode, the second electrode 220 may be a positive electrode.

Further, the length of the second electrode 220 may be smaller than the length of the first electrode 210. In other words, the length of the first electrode 210 may be larger than the length of the second electrode 220. That is, the first electrode 210 and the second electrode 220 have different lengths from each other, and thus, a length difference may exist between the first electrode 210 and the second electrode 220.

The separator sheet 250 may have a zigzag shape formed by being folded at least twice. More specifically, as shown in FIG. 2, the separator sheet 250 may be folded in a direction of covering the first electrode 210 in a state in which the first electrode 210 is stacked. Also, it may be folded in a direction of covering the second electrode 220 in a state where the second electrode 220 is stacked on the separator sheet 250 that covers the first electrode 210. After that, it may be folded in a direction of covering the first electrode 210 in a state in which the first electrode 210 is stacked on the separator sheet 250 covering the second electrode 220. That is, the electrode assembly 200 can be formed by repeatedly performing stacking of the first electrode 210 or the second electrode 220 and folding of the separator sheet 250.

Therefore, the separator sheet 250 may be interposed between the upper surface of the first electrode 210 and the lower surface of the second electrode 220 and between the upper surface of the second electrode 220 and the lower surface of the first electrode 210.

In addition, as the separator is folded as described above, an opposite side surface of the side surface wrapped by the separator sheet 250 among both side surfaces of the first electrode 210, and a side surface wrapped by the separator sheet 250 among both side surfaces of the second electrode 220 may have a structure in which they are located so as to be adjacent to each other. At the same time, a side surface wrapped by the separator sheet 250 among both side surfaces of the first electrode 210 and an opposite side surface of the side surface wrapped by the separator sheet 250 among both side surfaces of the second electrode 220 may have a structure in which they are located so as to be adjacent to each other. Thus, a Z-folding type electrode assembly can be formed.

Further, the side surface wrapped by the separator sheet 250 among both side surfaces of the second electrode 220 is spaced apart from the separator sheet 250, and the side surface wrapped by the separator sheet among both side surfaces of the first electrode 210 may be spaced apart from the separator sheet 250. That is, the side surface wrapped by the separator sheet 250 among both side surfaces of the first electrode 210 and the side surface wrapped by the separator sheet 250 among both side surfaces of the second electrode 220 may be respectively spaced apart from the separator sheet 250. Here, "the side surface of the first electrode 210 or the second electrode 220 and the separator sheet 250 are spaced apart" may mean that the separator sheet 250 extends away from the side surface of the first electrode 210 or the second electrode 220, or the separator sheet 250 is spaced apart from the side surface of the first electrode 210 or the second electrode 220 to form a partial space, and wrap the first electrode 210 or the second electrode 220.

At this time, the side surface of the first electrode 210 wrapped by the separator sheet 250 and the side surface of the second electrode 220 wrapped by the separator sheet 250 are respectively spaced apart from the separator sheet 250, thereby capable of preventing damages of the electrodes 210 and 220 by the separator sheet 250. If the separation does not exist between the separator sheet 250 and the electrodes 210 and 220, during the process of assembling the separator sheet 250 and the electrodes 210 and 220, the direction of the separator sheet 250 changes, and the tension generated therefrom may cause the electrodes 210 and 220 to crack or break, thereby occurring damages. Therefore, the side surface of the first electrode 210 wrapped by the separator sheet 250 and the side surface of the second electrode 220 wrapped by the separator sheet 250 are respectively spaced apart from the separator sheet 250, thereby capable of preventing damages of the electrodes 210 and 220 by the separator sheet 250 and improving the stability of the electrode assembly.

Further, an opposite side surface of the side surface wrapped by the separator sheet 250 among both side surfaces of the first electrode 210 may protrude further than the second electrode 220 from the side surface wrapped by the separator sheet 250 among both side surfaces of the second electrode 220. At the same time, the side surface wrapped by the separator sheet 250 among both side surfaces of the first electrode 210 may protrude further than the second electrode 220 from the opposite side surface of the side surface wrapped by the separator sheet 250 among both side surfaces of the second electrode 220. In other words, the first electrode 210 may be formed such that at least one side surface protrudes further than the second electrode 220, and specifically, the whole of both side surfaces may protrude. Therefore, this may mean that based on the whole of both side surfaces, the second electrode 220 is located on the inside than the first electrode 210.

Meanwhile, an opposite side surface of the side surface wrapped by the separator sheet 250 among both side surfaces of the first electrode 210 may be located on the same vertical line as the outer side surface of the electrode assembly 200. In other words, the opposite side surface of the side surface wrapped by the separator sheet 250 among both side surfaces of the first electrode 210 may not be protruded or recessed toward the outer side surface of the electrode assembly 200. Thereby, in the present embodiment, the separator sheet 250 located above the first electrode 210 and the separator sheet 250 located below the first electrode 210 can be prevented from being folded during the process.

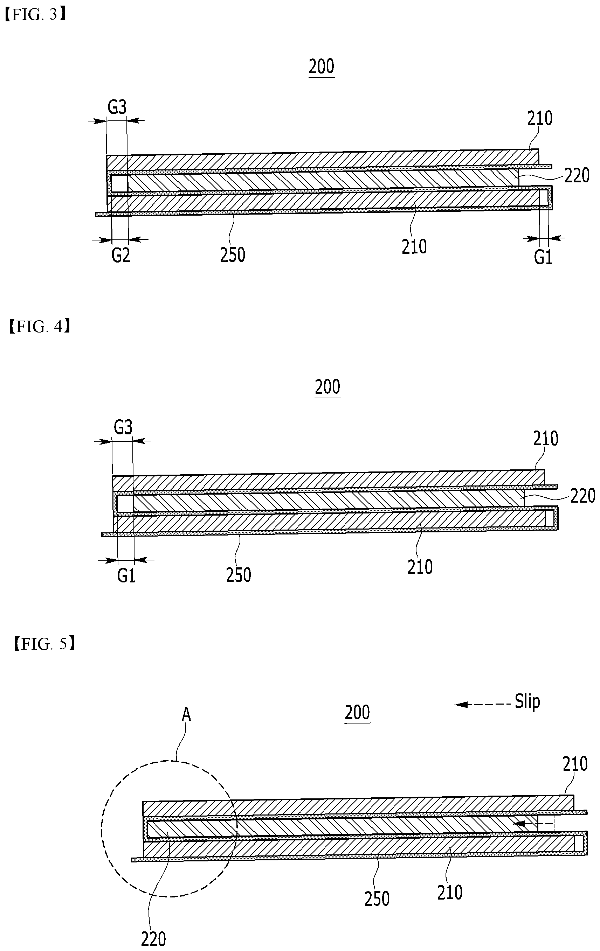

Next, an electrode assembly according to an embodiment of the present disclosure will be described in more detail with reference to FIGS. 3 to 9.

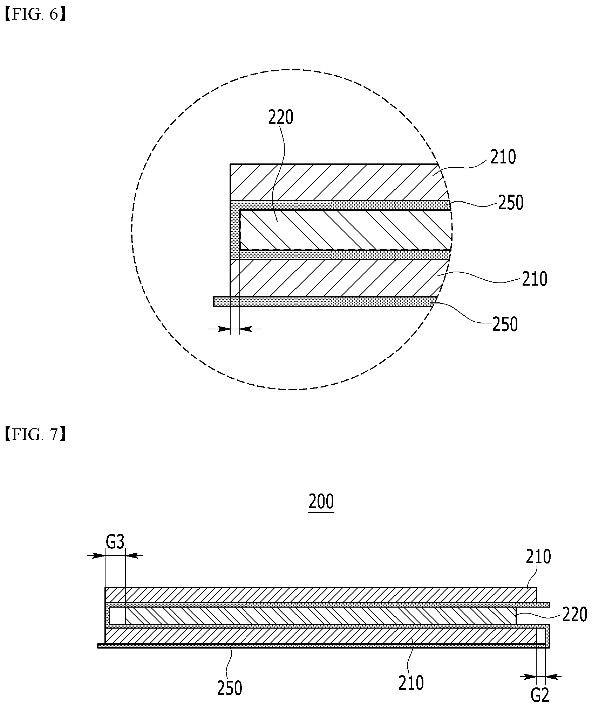

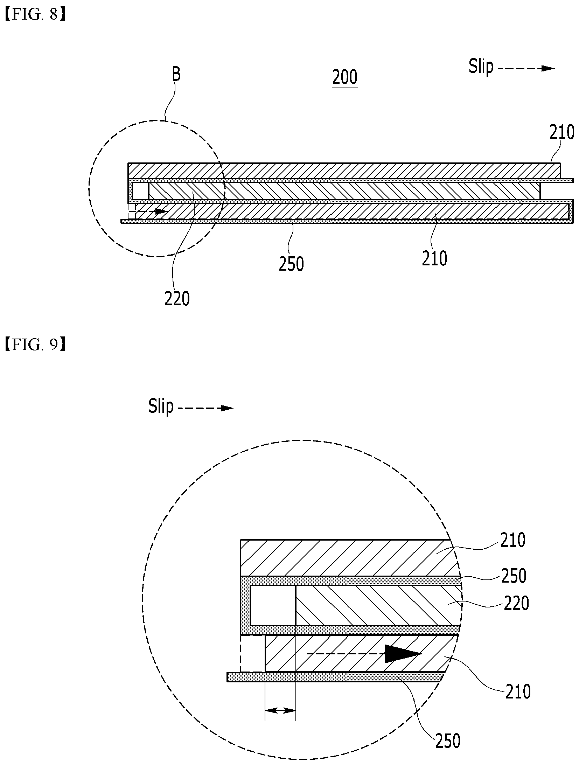

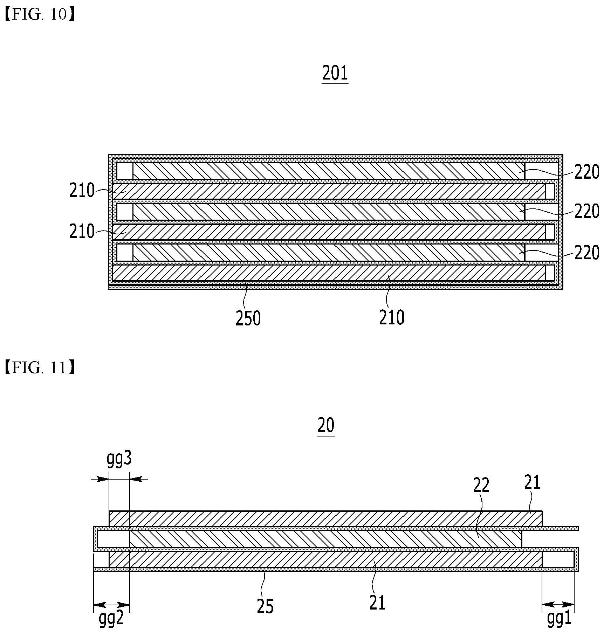

FIGS. 3 and 4 are diagrams showing a part of the cross section of the electrode assembly of FIG. 2. FIG. 5 is a diagram showing a slip of the second electrode of FIG. 4. FIG. 6 is an enlarged view of section A of FIG. 5. FIG. 7 is a diagram showing a part of a cross section of the electrode assembly of FIG. 2. FIG. 8 is a diagram showing a slip of the first electrode of FIG. 7. FIG. 9 is an enlarged view of section B of FIG. 8. FIG. 10 is a cross-sectional view of an electrode assembly according to another embodiment of the present disclosure. FIG. 11 is a view showing a part of a cross section of an electrode assembly according to a comparative example.

Referring to FIGS. 3 and 4, the side surface of the first electrode 210 wrapped by the separator sheet 250 and the side surface of the second electrode 220 wrapped by the separator sheet 250 are respectively spaced apart from the separator sheet 250. At this time, a separation distance G2 between the separator sheet 250 and the side surface of the second electrode 220 may be equal to or shorter than a length G3 by which the first electrode 210 protrudes further than the second electrode 220 from the side surface of the second electrode 220 wrapped by the separator sheet 250.

Referring to FIG. 11, in a conventional electrode assembly 20, as the portion of the separator sheet 25 wrapping the electrodes 21 and 22 is formed to greatly exceed the first electrode 21 and the second electrode 22, there is a high possibility of occurrence of overhang in which the second electrode 22 deviates from the first electrode 21 to disturb alignment. In particular, a separation distance gg1 between the separator sheet 25 and the first electrode 21 and a separation distance gg2 between the separator sheet 25 and the second electrode 25 are formed longer than a length difference gg3 between the first electrode 21 and the second electrode 22. Thus, if a slip occurs between the first electrode 21 and the second electrode 22, the possibility of occurrence of overhang is very high.

At this time, if the overhang phenomenon occurs, not only the performance of the electrode assembly and the battery cell including the electrode assembly deteriorates, but also the possibility of defects such as short circuits may become very large, which causes a problem that the stability of the electrode assembly and the battery cell cannot be secured. Therefore, there is a need to develop an electrode assembly structure having a structure that can prevent the occurrence of overhang in which the second electrode deviates from the first electrode to disturb alignment.

Thus, referring to FIGS. 5 and 6, a separation distance G2 between the separator sheet 250 and the side surface of the second electrode 220 in the electrode assembly 200 according to the present embodiment is formed equal to or shorter than a length G3 by which the first electrode 210 protrudes further than the second electrode 220 from the side surface wrapped by the separator sheet 250 among both side surfaces of the second electrode 220. At this time, a separation distance G2 between the separator sheet 250 and the side surface of the second electrode 220 may be a separation distance G2 between the separator sheet 250 and the side surface of the second electrode 220 wrapped by the separator sheet 250 among both side surfaces of the second electrode 220. Further, an opposite side surface of a side surface wrapped by the separator sheet 250 among both side surfaces of the first electrode 210 may be located on the same vertical line as the outer side surface of the electrode assembly 200. In other words, the opposite side surface of the side surface wrapped by the separator sheet 250 among both side surfaces of the first electrode 210 may not be protruded or recessed toward the outer side surface of the electrode assembly 200.

At this time, when the second electrode 220 slips, that is, even when the slip has occurred, the opposite side surface of the side surface wrapped by the separator sheet 250 among both side surfaces of the first electrode 210 can be maintained to protrude further than the second electrode 220 from the side surface wrapped by the separator sheet 250 among both side surfaces of the second electrode 220.

In particular, referring to FIG. 6, even when the side surface wrapped by the separator sheet 250 among both side surfaces of the second electrode 220 makes contact with the separator sheet 250, the opposite side surface of the side surface wrapped by the separator sheet 250 among both side surfaces of the first electrode 210 may still maintain a shape that protrudes further toward the outer surface of the electrode assembly 200 than the second electrode 220. Therefore, even if the second electrode 220 slips, an overhang phenomenon, in which the second electrode 220 deviates from the first electrode 210 to disturb alignment, may not occur.

In addition, when the side surface wrapped by the separator sheet 250 among both side surfaces of the second electrode 220 makes contact with the separator sheet 250, an opposite side surface of the side surface wrapped by the separator sheet 250 among both side surfaces of the first electrode 210 may be located on the same vertical line as the second electrode 220 with respect to the side surface wrapped by the separator sheet 250 among both side surfaces of the second electrode 220. This can be assumed the case when the thickness of the separator sheet 250 is so thin that it can be ignored. Therefore, even if the second electrode 220 slips, an overhang phenomenon, in which the second electrode 220 deviates from the first electrode 210 to disturb alignment, may not occur.

If a separation distance G2 between the separator sheet 250 and the side surface of the second electrode 220 is formed longer than a length G3 by which the first electrode 210 protrudes further the second electrode 220 from the side surface wrapped by the separator sheet 250 among both side surfaces of the second electrode 220, that is, if the separator sheet 250 is formed to exceed the thickness of the separator sheet 250 toward the opposite side surface of the side wrapped by the separator sheet 250 among both side surfaces of the first electrode 210, the second electrode 220 slips and the second electrode 220 deviates from the first electrode 210 to disturb alignment, which may result in an overhang phenomenon.

Therefore, the separation distance G2 between the separator sheet 250 and the side surface of the second electrode 220 in the electrode assembly according to the present embodiment is formed equal to or shorter than the length G3 by which the first electrode 210 protrudes further than the second electrode 220 from the side surface wrapped by the separator sheet 250 among both side surfaces of the second electrode 220, and the opposite side surface of the side surface wrapped by the separator sheet 250 among both side surfaces of the first electrode 210 is located on the same vertical line as the outer side surface of the electrode assembly 200, thereby capable of preventing an overhang phenomenon caused by a slip phenomenon of the second electrode 220, minimizing performance degradation and short-circuiting of the electrode assembly and further improving the stability.

Meanwhile, referring to FIGS. 3 and 7, a separation distance G1 between the separator sheet 250 and the side surface of the first electrode 210 in the electrode assembly 200 according to the present embodiment may be equal to or shorter than a length G3 by which the first electrode 210 protrudes further than the second electrode 220 from the side surface wrapped by the separator sheet 250 among both side surfaces of the second electrode 220. At this time, a separation distance G1 between the separator sheet 250 and the side surface of the first electrode 210 may be a separation distance G1 between the separator sheet 250 and the side surface wrapped by the separator sheet 250 among both side surfaces of the first electrode 210.

Further, an opposite side surface of the side surface wrapped by the separator sheet 250 among both side surfaces of the first electrode 210 may be located on the same vertical line as the outer side surface of the electrode assembly 200. In other words, the opposite side surface of the side surface wrapped by the separator sheet 250 among both side surfaces of the first electrode 210 may not be protruded or recessed toward the outer side surface of the electrode assembly 200. In other words, the opposite side surface of the side surface wrapped by the separator sheet 250 among both side surfaces of the first electrode 210 may be located on the same vertical line as the outer side surface of the separator sheet 250 that wraps the second electrode 220.

At this time, when the first electrode 210 slips, that is, even when the slip has occurred, the opposite side surface of the side surface wrapped by the separator sheet 250 among both side surfaces of the first electrode 210 can be maintained so as to protrude further than the second electrode 220 from the side surface wrapped by the separator sheet 250 among both side surfaces of the second electrode 220.

In particular, referring to FIGS. 8 and 9, even when the side surface wrapped by the separator sheet 250 among the second electrode 220 makes contact with the separator sheet 250, the opposite side surface of the side surface wrapped by the separator sheet 250 among both side surfaces of the first electrode 210 may still maintain a shape that protrudes further toward the outer surface of the electrode assembly 200 than the second electrode 220. Therefore, even if the second electrode 220 slips, it is possible to prevent an overhang phenomenon in which the second electrode 220 deviates from the first electrode 210 to disturb alignment.

In addition, in a case where the separation distance G1 between the separator sheet 250 and the side surface of the first electrode 210 is equal to the length G3 by which the first electrode 210 protrudes further than the second electrode 220 from the side surface wrapped by the separator sheet 250 among both side surfaces of the second electrode 220, even when the side surface wrapped by the separator sheet 250 among both side surfaces of the first electrode 210 makes contact with the separator sheet 250, the opposite side surface of the side surface wrapped by the separator sheet 250 among both side surfaces of the first electrode 210 is located on the same vertical line as the second electrode 220 with respect to the side surface wrapped by the separator sheet 250 among both side surfaces of the second electrode 220, so that the first electrode 210 may not protrude further toward the outer surface of the electrode assembly 200 than the second electrode 220. Therefore, even if the first electrode 210 slips, it is possible to prevent an overhang phenomenon in which the second electrode 220 deviates from the first electrode 210 to disturb alignment.

If the separation distance G1 between the separator sheet 250 and the side surface of the first electrode 210 is formed longer than the length G3 by which the first electrode 210 protrudes further than the second electrode 220 from the side surface wrapped by the separator sheet 250 among both side surfaces of the second electrode 220, the first electrode 210 slips and the second electrode 220 deviates from the first electrode 210 to disturb alignment, which may result in an overhang phenomenon. That is, as shown in FIG. 9, the first electrode 210 slips and is located in the inner side direction of the electrode assembly 200 than the second electrode 220, so that an overhang phenomenon may occur in which the second electrode 220 protrudes further than the first electrode 210.

Therefore, the separation distance G2 between the separator sheet 250 and the side surface of the first electrode 210 in the electrode assembly according to the present embodiment is formed equal to or shorter than the length G3 by which the first electrode 210 protrudes further than the second electrode 220 from the side surface wrapped by the separator sheet 250 among both side surfaces of the second electrode 220, thereby capable of preventing an overhang phenomenon caused by a slip phenomenon of the first electrode 210, minimizing performance degradation and short-circuiting of the electrode assembly and further improving the stability.

Meanwhile, referring to FIG. 3, a separation distance G1 between the separator sheet 250 and the side surface of the first electrode 210 in the electrode assembly 200 according to the present embodiment may be equal to or shorter than the separation distance G2 between the separator sheet 250 and the side surface of the second electrode 220. At this time, when the separation distance G1 between the separator sheet 250 and the side surface of the first electrode 210 is shorter than the separation distance G1 between the separator sheet 250 and the side surface of the second electrode 220, the first electrode 210 and the second electrode 220 have different lengths and a tolerance between the second electrode 220 and the outer surface of the electrode assembly 200 resulting therefrom can be further reduced. Further, the possibility of occurrence of overhang due to slippage of the first electrode 210 can be further reduced.

Further event when the separation distance G1 between the separator sheet 250 and the side surface of the first electrode 210 in the electrode assembly 200 according to the present embodiment is equal to the separation distance G2 between the second electrode 220 and the side surface of the separator sheet 250, the first electrode 210 still protrudes by a length corresponding to the thickness of the separator sheet 250. Thus, even if the slip phenomenon of the first electrode 210 occurs, the opposite surface of the side surface wrapped by the separator sheet 250 among both side surfaces of the first electrode 210 can still maintained a shape that protrudes further toward the outer surface of the electrode assembly 200 than the second electrode 220. Therefore, it is possible to prevent the occurrence of the overhang phenomenon.

Therefore, the separation distance G1 between the separator sheet 250 and the side surface of the first electrode 210 in the electrode assembly 200 according to the present embodiment is formed equal to or shorter than the separation distance G2 between the separator sheet 250 and the side surface of the second electrode 220, thereby capable of further reducing the possibility of occurrence of overhang.

FIG. 10 is a cross-sectional view of an electrode assembly according to another embodiment of the present disclosure.

Referring to FIG. 10, the electrode assembly 201 according to another embodiment of the present disclosure can be described almost similarly to the electrode assembly 200 described above, and thus, only parts different from the electrode assembly 200 will be described below.

Referring to FIG. 10, one end of the separator sheet 250 of the electrode assembly 201 according to the present embodiment may extend along the outer surface of the electrode assembly 201. More specifically, one end of the separator sheet 250 may wrap the entire outer surface of the electrode assembly 201. That is, one end of the separator sheet 250 may wrap both side surfaces and upper and lower surfaces of the electrode assembly 201.

As an example, as shown in FIG. 10, an end of the separator sheet 250 wrapping the outer surface of the electrode assembly 201 may be an end of the separator sheet 250 closest to the bottom surface. As another example, unlike those shown in FIG. 10, an end of the separator sheet 250 wrapping the outer surface of the electrode assembly 201 may be an end of the separator sheet 250 adjacent to an upper end of the electrode assembly 201.

Accordingly, in the electrode assembly 201 according to the present embodiment, the separator sheet 250 wraps the outer surface of the electrode assembly 201 to prevent the first electrode 210 from protruding to the outside. In addition, the present embodiment can improve cost reduction and economic efficiency in that no separate member is required.

According to yet another embodiment of the present disclosure, there is provided a battery cell comprising the above-mentioned electrode assembly. The battery cell may include a battery case (not shown) that houses the above-mentioned electrode assemblies 200 and 201 together with an electrolyte solution. At this time, the electrode assemblies 200 and 201 may be made into the final electrode assembly 100 described above and housed in a battery case (not shown).

Here, the battery case (not shown) may be a laminate sheet including a resin layer and a metal layer. More specifically, the battery case (not shown) is made from a laminate sheet, and may be composed of an outer side resin layer that forms the outermost shell, a shielding metal layer that prevents penetration of materials, and an inner resin layer for sealing.

Although the invention has been described in detail with reference to preferred embodiments thereof, the scope of the present disclosure is not limited thereto, and various modifications and improvements can be made by those skilled in the art using the basic concepts of the present disclosure as defined in the appended claims, which also falls within the scope of the present disclosure.

### [Description of Reference Numerals]

100: final electrode assembly
200: electrode assembly
210: first electrode
220: second electrode
250: separator sheet
300: fixing tape
400: electrode lead
500: lead film

## Claims

1. An electrode assembly in which electrodes and separator sheets are alternately stacked, wherein:
the electrode comprises a first electrode and a second electrode,
the separator sheet has a zigzag shape formed by being folded at least twice,
a length of the second electrode is shorter than a length of the first electrode,
a side surface wrapped by the separator sheet among both side surfaces of the first electrode and a side surface wrapped by the separator sheet among both side surfaces of the second electrode are respectively spaced apart from the separator sheet,
an opposite side surface of the side surface wrapped by the separator sheet among both side surfaces of the first electrode protrudes further than the separator sheet from the side surface wrapped by the separator sheet among both side surfaces of the second electrode, and
a separation distance between the separator sheet and the side surface of the second electrode is equal to or shorter than a distance by which the first electrode protrudes further than the second electrode from the side surface wrapped by the separator sheet among both side surfaces of the second electrode.

2. The electrode assembly of claim 1, wherein:
the separation distance between the separator sheet and the side surface of the second electrode is equal to or shorter than the distance by which the first electrode protrudes further than the second electrode from the side surface wrapped by the separator sheet among both side surfaces of the second electrode.

3. The electrode assembly of claim 2, wherein:
the separation distance between the separator sheet and the side surface of the first electrode is equal to or shorter than the separation distance between the separator sheet and the side surface of the second electrode.

4. The electrode assembly of claim 1, wherein:
the side surface wrapped by the separator sheet among both side surfaces of the first electrode protrudes further than the second electrode from the opposite side surface of the side surface wrapped by the separator sheet among both side surfaces of the second electrode.

5. The electrode assembly of claim 1, wherein:
the opposite side surface of the side surface wrapped by the separator sheet among both side surfaces of the first electrode is located on the same vertical line as the outer side surface of the electrode assembly.

6. The electrode assembly of claim 1, wherein:
the opposite side surface of the side surface wrapped by the separator sheet among both side surfaces of the first electrode and the side surface wrapped by the separator sheet among both side surfaces of the second electrode are located so as to be adjacent to each other.

7. The electrode assembly of claim 1, wherein:
the separator sheet is interposed between the upper surface of the first electrode and the lower surface of the second electrode and between the upper surface of the second electrode and the lower surface of the first electrode.

8. The electrode assembly of claim 1, wherein:
when the side surface wrapped by the separator sheet among both side surfaces of the second electrode makes contact with the separator sheet,
the opposite side surface of the side surface wrapped by the separator sheet among both side surfaces of the first electrode is maintained so as to protrude further than the second electrode from the side surface wrapped by the separator sheet among both side surfaces of the second electrode.

9. The electrode assembly of claim 1, wherein:
when the side surface wrapped by the separator sheet among both side surfaces of the first electrode makes contact with the separator sheet,
the opposite side surface of the side surface wrapped by the separator sheet among both side surfaces of the first electrode is maintained so as to protrude further than the second electrode from the side surface wrapped by the separator sheet among both side surfaces of the second electrode.

10. The electrode assembly of claim 1, wherein:
when the side surface wrapped by the separator sheet among both side surfaces of the first electrode makes contact with the separator sheet,
the opposite side surface of the side surface wrapped by the separator sheet among both side surfaces of the first electrode is located on the same vertical line as the second electrode with respect to the side surface wrapped by the separator sheet among both side surfaces of the second electrode.

11. The electrode assembly of claim 1, wherein:
one end of the separator sheet is extended along an outer surface of the electrode assembly.

12. The electrode assembly of claim 11, wherein:
one end of the separator sheet wraps an entire outer surface of the electrode assembly.

13. A battery cell comprising the electrode assembly of claim 1.
